# EUROPÄISCHE PATENTSCHRIFT

(11) **EP 1 727 686 B1**
(45) Veröffentlichungstag und Bekanntmachung des Hinweises auf die Patenterteilung: **29.05.2013**
(21) Anmeldenummer: 04821736.8
(22) Anmeldetag: 19.11.2004
(51) Int. Cl.: B44C 5/04, B32B 29/06, D21H 17/37, D21H 27/26, E04F 15/02, C08K 3/04, C08L 33/08

(54) **KOHLENSTOFFHALTIGES DEKORPAPIER NEBST PANEEL**
CARBON-CONTAINING DECORATIVE PAPER AND PANEL
PAPIER DÉCORATIF ET PANNEAU CONTENANT DU CARBONE

(30) Priorität: 20.02.2004 DE 202004002832 U
(43) Veröffentlichungstag der Anmeldung: 06.12.2006
(73) Patentinhaber: Kronoplus Technical AG, 9052 Niederteufen (CH)
(72) Erfinder: DÖHRING, Dieter, 01561 Lampertswalde (DE)
(74) Vertreter: Heselberger, Johannes
(86) Internationale Anmeldenummer: PCT/EP2004/053015
(87) Internationale Veröffentlichungsnummer: WO 2005/090097

(56) Entgegenhaltungen:
- WO-A-02/079571
- DE-A1- 3 323 461
- DE-A1- 3 446 632
- DE-A1- 3 511 046
- DE-U- 7 102 181
- US-A- 4 430 375
- US-A- 4 472 474
- US-A- 4 784 908
- US-A- 5 677 039
- PATENT ABSTRACTS OF JAPAN Bd. 017, Nr. 011 (C-1015), 8. Januar 1993 (1993-01-08) & JP 04 240300 A (CHIYODA GURABIYA INSATSUSHIYA:KK), 27. August 1992 (1992-08-27)

## Beschreibung

Die Erfindung betrifft ein Papier sowie hieraus hergestellte Paneele für einen Fußboden. Die Paneele umfassen einen Träger und das hierauf angebrachte Papier, welches in der Regel bedruckt ist und dann Dekorpapier genannt wird. In der Regel ist unterhalb des Trägers ein Gegenzug vorzugsweise in Form eines Papiers aufgebracht. Die Paneele weisen seitlich Kupplungselemente auf. Paneele können so mit oder ohne Leim zusammengefügt werden, wie beispielsweise in der WO 01/94721 A1 beschrieben wird.

Das Dekorpapier kann aufgebrachte abriebfeste Partikel aus Korund, Aluminiumoxid oder Siliziumkarbid aufweisen, um für ein Begehen geeignet zu sein, Die abriebfesten Partikel sind in einer Harzmatrix eingebettet. Als Harze werden aus Kostengründen bevorzugt Melaminharze verwendet, die mit Harnstoffharzen versetzt sein können. Verfahren zur Herstellung eines Dekorpapiers für Fußbodenpaneele sind aus den Druckschriften US 4,940,503, WO 00/44576 A1, WO00/44984 A1 sowie der WO02/066265 bekannt.

Das Gegenzugpapier kann am Träger mittels eines Harzes angebracht sein. Als Harz wird dann Harnstoffharz bevorzugt, da es auf der Unterseite weniger auf Widerstandsfähigkeit gegenüber Feuchtigkeit ankommt. Es kann daher auf teurere Zusätze wie Melaminharz verzichtet werden.

Als Träger dient vielfach eine Platte aus einem Holzwerkstoff. Derzeit wird HDF als Trägermaterial bevorzugt, da dieses Material für einen Holzwerkstoff vergleichswelse formstabil ist und gut bearbeitet werden kann, Ein Herstellungsverfahren für eine solche Platte wird in der DE 20210718 U1 beschrieben.

Ein Träger für einen Laminatfußboden kann aber auch aus mehreren Paplerschichten bestehen, die miteinander verleimt worden sind, wie beispielsweise die WO 96/27721 offenbart.

Ein solcher Laminatfußboden kann sich insbesondere bei geringer relativer Luftfeuchtigkeit beim Begehen statisch aufladen. Eine Luftfeuchtigkeit unterhalb von 50% ist gering im Sinne der Erfindung. Unter ungünstigen Bedingungen kann sich ein Mensch auf eine Körperspannung von bis zu 25.000 Volt aufladen.

Bei Annäherung an geerdete Teile wie einem Heizkörper treten Entladungsfunken auf, welche bei empfindlichen Personen bereits oberhalb von 2KV spürbar sind. Bel höheren Ladungen kann die Entladung schmerzhaft sein. Durch derartige Aufladungen können elektronische Geräte wie Computer und elektronische Schaltungen beschädigt werden.

Um diesem Problem zu begegnen, werden Paneele mit sogenanntem "astatischem" Verhalten angeboten. Gemäß der EN 1815 darf ein Paneel so bezeichnet werden, wenn die mögliche Aufladung von Personen unterhalb von 2000 V liegt.

Aufgabe der Erfindung ist die Schaffung eines Dekorpapiers nebst Paneel mit antistatischen Eigenschaften.

Gelöst wird die Aufgabe durch ein Papier mit den Merkmalen des Hauptanspruchs. Vorteilhafte Ausgestaltungen ergeben sich aus den abhängigen Ansprüchen.

Erfindungsgemäß wird ein Papier, und zwar bevorzugt ein sogenanntes Dekorpapier mit leitfähigem Material und zwar insbesondere Kohlenstoff versehen. Dies geschieht vorteilhaft, indem Kohlenstoff einer Dispersion zugegeben wird, die Harz und zwar insbesondere ein Aminoharz und/oder ein Acrylatharz enthält. Das Acrylatharz wird bevorzugt dann verwendet, wenn die Festigkeit des Papiers gesteigert werden soll. Die Festigkeit soll insbesondere dann gesteigert werden, wenn sehr dünnes Papier zwecks Einsparung von Kosten eingesetzt werden soll. Ein dünnes Papier im Sinne der Erfindung liegt vor, wenn das Flächengewicht 50 g/m² nicht übersteigt. Das erfindungsgemäße Papier kann im unbehandelten Zustand lediglich 10 g/m² betragen. Ist es mit einem Acrylatharz versehen, dann kann dadurch die Festigkeit hinreichend gesteigert werden und zwar insbesondere dann, wenn die Acrylatharz haltige Dispersion In das Papier hineingepresst wird. Die Dispersion kann in das Papier im Sinne der Erfindung hineingepresst werden, wenn die Dispersion über zwei Walzen auf das Papier gebracht werden, wobei die Walzen gegeneinander gepresst sind und das Papier zwischen den Walzen verläuft. Hiervon zu unterscheiden sind die Fälle, bei denen Acrylatharz lediglich auf das Papier aufgetragen wird, wie beispielsweise aus der WO02/079571 bekannt ist.

Um Störungen zu minimleren, sind die zumindest die Oberflächen der für das Hineinpressen der Dispersion vorgesehenen Walzen mit einer Gummierung versehen.

Ein Anteil an Kohlenstoff im Verhältnis zur eingesetzten Papiermasse von lediglich 1 bis 2 Gew.-% genügt bereits, um eine deutliche Steigerung der Leitfähigkeit festzustellen. Beträgt also in einem bevorzugten Beispiel die Papiermasse 30 g/m², so genügen 0,5 g Kohlenstoff pro m² Papier, um die Leitfähigkeit des Papiers deutlich zu steigern. Belm genannten Beispiel sollte der Kohlenstoffanteil 20 g nicht übersteigen. Es sollte also die Obergrenze von 60 bis 70 Gew.-% nicht überschritten werden. Als vorteilhaft hat sich eine Menge 25 bis 35 Gew.-%, also im genannten Beispiel von 8 bis 1 0 g pro m² Papier herausgestellt, um einerseits die gewünschten antistatischen Eigenschaften beim Paneel zu erhalten und andererseits ein Dekorpapier hinreichend preiswert bereitstellen zu können.

Das Papier kann in Form einer Papierbahn durch ein Gemisch (also durch die Dispersion) geführt werden, welches neben Harnstoff- und/ oder Melaminharzen die genannten leitfähigen Materialien und zwar insbesondere Kohlenstoff enthält, Das so getränkte Papier wird getrocknet und zu gegebener Zeit mit einem Träger vorzugsweise unter Zufuhr von Wärme verpresst.

Das Gemisch bzw. die Dispersion kann alternativ zum Beispiel aufgesprüht werden.

Es resultiert ein Paneel mit verbesserten antistatischen Eigenschaften im Vergleich zu einem Paneel, bel dem das Papier mit anderen üblichen Harzen getränkt worden ist. Durch die leitfähigen Partikel wird nämlich die elektrische Leitfähigkeit im Oberflächenbereich des Fußbodenbelags gesteigert. Dies führt zu einer reduzierten Aufladung von Personen, die den Fußbodenbelag betreten.

Abriebfeste Partikel können gemäß dem eingangs beschriebenen Stand der Technik auf die Dekoroberseite aufgebracht werden. Um kostengünstig zu produzieren, enthält das Gemisch bereits abriebfeste Partikel und zwar insbesondere Aluminiumoxid bzw. Korund, da dieses Material In Regel kaum sichtbar ist und somit die Sicht auf das Dekor kaum beeinträchtigt wird. Es werden dann in einem Arbeitsgang abriebfeste Partikel auf das Dekorpapier aufgetragen und zugleich die antistatischen Eigenschaften verbessert.

Bevorzugt wird zunächst ein leitfähiges Papier bereitgestellt und dieses erst im Anschluss daran mit einem Dekor versehen und zwar insbesondere durch Bedrucken. Hierdurch wird erreicht, dass das Dekor optisch nicht durch leitfähige Materialien wie Kohlenstoff beeinträchtig wird.

Auf die Oberseite des Dekors wird dann eine Schicht mit abriebfesten Partikeln aufgebracht, wie dies beispielsweise in der Druckschrift EP 1068083 A1 oder WO 00/44984 offenbart worden ist. Die hieraus bekannten Verfahren beziehen wir in den Offenbarungsgehalt der vorliegenden Anmeldung mit ein.

Abschließend kann je nach Ausführungsform eln Overlay mit einem Gemisch getränkt, dass ein Harz wie Harnstoffharz und/ oder Melaminharz enthält, Außerdem kann dieses Gemisch ebenfalls Substanzen enthalten, die die elektrische Leitfähigkeit erhöhen. Träger, Dekorpapier und soweit erforderlich Overlay werden dann miteinander zur Platte verpresst. In der Regel wird ein Gegenzugpapier mit verpresst, welches sich dann an der Unterseite des Trägers befindet.

Alternativ können abriebfeste Partikel wie Korund einseitig auf das Overlay aufgebracht worden sein. Träger, Dekorpapier und Overlay sowie gegebenenfalls ein Gegenzugpapier werden so miteinander verpresst, dass sich die abriebfesten Partikel zwischen dem Dekorpapier und dem Overlay befinden. Das Dekor ist dann auf der Oberfläche der Platte sichtbar.

Wird Kohlenstoff in Form von sehr kleinen Partikeln mit Durchmessern im Nanometerbereich der Dispersion zugegeben, so gelingt eine besonders gute Verteilung des Kohlenstoffs im Papier. Erfindungsgemäß wurde die mögliche Aufladung des Fußbodens bei 25% relativer Luftfeuchtigkeit auf bis zu 0,8 KV reduziert. Ein herkömmlicher Fußboden kann sich bei ansonsten vergleichbaren Bedingungen auf 5 bis 6 kV aufladen. Die Norm EN 1815 kann also erfindungsgemäß problemlos eingehalten werden.

Es hat sich ferner herausgestellt, dass der Einsatz von leitfähigen Partikeln in der Dispersion, die in das Papier gepresst wird, regelmäßig die elektrische Leitfähigkeit vergleichsweise gering erhöht. Vermutlich liegt dies daran, weil die Harze die elektrisch leitfähigen Partikel kapseln und so elektrisch isolieren. Ein derartiger Effekt war bei Kohlenstoff überraschend nicht zu beobachten.

Das Papier kann alternativ schon bei der Herstellung des Papiers mit leitfähigen Substanzen wie Kohlenstoff versehen werden, um so die Leitfähigkeit erfindungsgemäß zu steigern. Erfindungsgemäß wird also ein Papier eingesetzt, dessen elektrische Leitfählgkeit die Leitfähigkeit des Gegenzugspapiers In der Regel um ein Mehrfaches übersteigt, da beim Gegenzugpapier eine elektrische Leitfähigkeit nicht von Interesse ist. In der Regel übersteigt die elektrische Leitfählgkeit des Dekorpapiers auch die elektrische Leitfähigkeit eines möglicherweise eingesetzten Overlaypapiers um ein Mehrfaches, da regelmäßig im Overlay leitfähige Partikel zu vermeiden sind, um die Optik eines Paneels nicht nachteilhaft zu beeinträchtigen.

Die Acrylat haltige Dispersion oder Mischung enthält insbesondere Wasser, in der Acrylat- sowie leitfähigen Partikel dispergiert sind. Geeignete Acrylate sowie leitfähige Partikel sind daher solche, die gut dispergierend sind.

In einer vorteilhaften Ausgestaltung der Erfindung wird die Acrylat haltige Dispersion oder Mischung nebst den leitfähigen Partikeln in das Papier hineingepresst. Hierfür wird das Papier insbesondere durch Walzen, die gegeneinander gepresst sind, hindurchgeführt. Die Walzen weisen bevorzugt eine gummierte Oberfläche auf, um Beschädigungen des Papiers zu vermeiden. Auf eine Walze wird die Acrylat haltige Dispersion oder Mischung kontinuierlich aufgetragen. Verlässt das Papier die Walze, so ist die Dispersion oder die Mischung mit den leitfählgen Partikeln in das Papier hineingepresst worden.

Von großem Vorteil ist, dass das dispergierte Acrylat auf das Papier nicht lediglich aufgestrichen wird, da dann das dispergierte Acrylat nicht oder nur unzureichend in das Papier eindringen würde. Durch das Pressen wird sichergestellt, dass die Dispersion oder die Mischung in das Papier eindringt und so das Papier die gewünschte verbesserte Festigkeit erlangt. Außerdem ist das Papier dann mit der Dispersion oder der Mischung so versehen, dass während der Weiterverarbeitung zu einer Platte zusätzlich eingesetztes Harz nicht oder zumindest nur noch relativ geringfügig in das Papier eindringt.

In einer vorteilhaften Ausgestaltung des Verfahrens wird das Papier vor dem Hineinpressen der Acrylat haltigen Dispersion oder Mischung der Imprägnierung entlüftet. Hierfür wird das Papier Insbesondere einseitig mit der Acrylat haltigen Dispersion oder Mischung getränkt, die bereits leitfähige Partikel enthalten kann. Die im Papier befindliche Luft wird so durch die Dispersion oder die Mischung ersetzt.

In einer Ausführungsform der Erfindung wird eine Harz-Acrylat-Mischung oder -Dispersion, Insbesondere eine Aminoharz-Acrylat-Mischung, die leitfähige Partikel und zwar insbesondere Kohlenstoff enthält, für die Imprägnierung verwendet. Mit einer derartigen Mischung oder Dispersion lassen sich Papiergewichte bis zu einer Untergrenze von ca. 10 g pro Quadratmeter realisieren. Derartig hergestellte Papiere sind bel geeignetem Mischungsverhältnis hinreichend reißfest, um bei der Plattenherstellung zum Beispiel als Gegenzugpapier eingesetzt werden zu können. Es kann dem Fachmann überlassen bleiben, geeignete Mischungsverhältnisse durch wenige Versuche aufzufinden.

Das Papier sollte eine Obergrenze von 50 g/m², bevorzugt von 35 g/m² nicht übersteigen, um hinreichend hohe Kostenvorteile zu erzielen. Optimale Werte liegen derzeit zwischen 25 bis 35 g/m².

In einer vorteilhaften Ausgestaltung der Erfindung werden Farbpigmente, so zum Beispiel Aluminiumsilikat, Kalziumkarbonat, TiO₂, AlO₂ oder Mangansilikat, der Dispersion hinzugefügt. Die Lichtdurchlässigkeit wird hierdurch stark reduziert. Das Papier kann dann im Anschluss mit einem Dekor versehen werden, ohne dass das Papier unerwünscht halbtransparent ist.

In einer bevorzugten Ausführungsform der Erfindung wird die Dispersion oder Mischung, die das Acrylatharz sowie den Kohlenstoff enthält, in entlüftetes Papier von beiden Selten hineingepresst. Es hat sich gezeigt, dass sich dann das Papier von der Mitte her mit der Acrylatharz haltigen Dispersion oder Mischung mit den leifähigen Partikeln auffüllt. Derartig imprägniertes Papier eignet sich für die eingangs genannte Plattenherstellung in besonders guter Weise.

Das verfahrensgemäß hergestellte Papier unterscheidet sich von sogenannten Finishfolien, bei denen Acrylat lediglich aufgetragen, nicht aber hineingepresst wird, insbesondere dadurch, dass sich das Acrylat im Papier und nicht lediglich ganz oder überwiegend auf der Oberfläche befindet. Die Spaltfestigkeit ist erheblich größer als bei den erwähnten Finishfolien, wie ein Wasserdampftest zeigt. Beim Wasserdampftest wird Papier zwei Stunden lang einem Wasserdampf ausgesetzt. Bei herkömmlichen Papier tritt im Unterschied zum erfindungsgemäßen eine Spaltung auf.

Das mit Acrylatharz versehene Papier kann auch als Gegenzugpapier bei der Herstellung einer Platte In der eingangs genannten Welse eingesetzt werden, um so ein besonders dünnes Papler verwenden zu können und damit Kosten einzusparen. Dieses als Gegenzug dienende Papier muss weder mit leitfähigen Partikeln noch mit Farbstoffen versehen sein. Eine gute elektrische Leitfähigkeit des Gegenzugpapiers würde nämlich nicht zu den gewünschten antistatischen Eigenschaften beitragen.

Kohlenstoff stellt lediglich ein bevorzugtes Ausführungsbeispiel dar. Mit quaternären Aminen lässt sich zum Beispiel ebenfalls die elektrische Leitfähigkeit steigern. Auch kann das Papier bereits während seiner Herstellung mit elektrisch leitfähigem Material versehen werden.

### Ausführungsbeispiel

In ein Papier 1 von 30 g/m² wird wie zuvor beschrieben eine Dispersion gepresst, die Kohlenstoffpartikel mit durchschnittlichem Durchmesser von weniger als 1 000 nm, bevorzugt von weniger als 500 nm aufweist. 8 bis 10 g Kohelnstoff werden pro Quadratmeter Papier eingesetzt. Die Dispersion umfasst ein Harnstoff- und/ oder Melaminharz sowie Acrylat. Nach Trocknung wird das Papier bedruckt und so mit einem Dekor versehen.

Das so hergestellte leitfähige Dekorpapier 1 wird mit einem Melaminharz imprägniert, mit abriebfesten Partikeln versehen und getrocknet. Mit seiner Unterseite wird das Dekorpapier auf eine 8 mm dicke HDF-Platte 3 gebracht. Auf das Dekor wird ein mit einer Mischung aus Melaminharz getränktes sogenanntes "Overlay" 4 gelegt. Alternativ werden Fasern und Melaminharz aufgebracht, um so die Kosten für die gesonderte Herstellung des Overlays einzusparen. Unterhalb der HDF-Platte wird ein mit einem Harnstoffharz getränktes, als Gegenzug dienendes Papier 5 gelegt. Beispielsweise in einer Kurztaktpresse werden die Papiere 1 und 5 inklusive Overlay 4 bzw. das Harz mit den Fasern mit der HDF-Platte 3 bei Temperaturen von 180°C bis 220 °C verpresst.

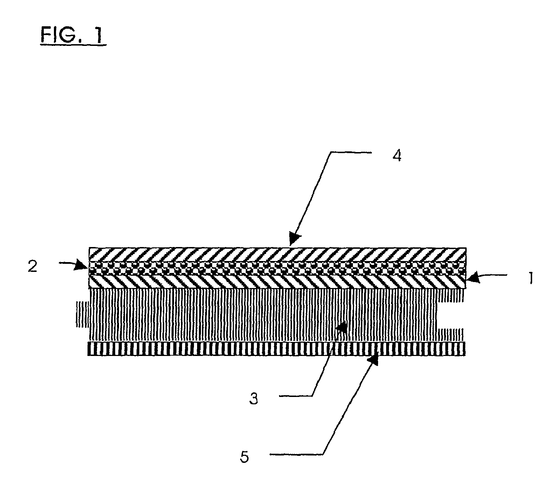

Aus der Platte 3 mit den verpressten Papieren werden durch Sägen und Fräsen Paneele mit Kupplungsmitteln mit den Maßen 1400 mm * 200 mm hergestellt. Das Ergebnis wird schematisch In der Figur gezeigt.

Ein Fußbodenbelag wurde zu Testzwecken aus mehreren Paneelen gebildet, die gemäß dem vorgenannten Beispiel hergestellt wurden. Bei einer relativen Luftfeuchte von 25% bei Raumtemperatur betrug die Aufladung der Versuchspersonen lediglich 0,8 kV. Vergleichspersonen luden sich bei konventionellen Paneelen bis zu 6 KV auf.

## Patentansprüche

1. Dekorpapier, welches mit leitfähigen Substanzen und zwar mit Kohlenstoff mit einer durchschnittlichen Partikelgröße von weniger als 1000 nm versehen ist.

2. Dekorpapier nach Anspruch 1, das zusätzlich mit einem Harnstoffharz und/oder einem Melaminharz und/oder einem Acrylatharz versehen ist.

3. Dekorpapier nach Anspruch 1 oder 2, das mit einem Dekor sowie auf dem Dekor bevorzugt mit abriebfesten Partikeln (2), besonders bevorzugt mit Aluminiumoxid oder Korund versehen ist.

4. Dekorpapier nach einem der vorhergehenden Ansprüche, bei dem das Papiergewicht zwischen 10 g/m² und 50 g/m² liegt.

5. Dekorpapier nach einem der vorhergehenden Ansprüche, welches mit Kohlenstoff mit einer durchschnittlichen Partikelgröße von weniger als 500 nm sowie bevorzugt von mehr als 1 nm versehen ist.

6. Dekorpapier nach einem der vorhergehenden Ansprüche, bei dem das Papier Acrylat im Inneren enthält.

7. Paneel für einen Fußboden, umfassend ein Dekorpapier (1) mit einer Oberfläche, die mit einem Dekor versehen ist und die leitfähige Partikel und zwar Kohlenstoffpartikel mit einer durchschnittlichen Partikelgröße von weniger als 1000 nm enthält.

8. Paneel nach Anspruch 7, bei dem die Oberfläche durch ein Dekorpapier (1) mit aufgebrachten abriebfesten Partikeln (2), insbesondere Korund gebildet wird, wobei das Dekorpapier eine größere elektrische Leitfähigkeit aufweist im Vergleich zu weiteren bei der Herstellung des Paneels eingesetzten Papieren.

9. Paneel nach einem der Ansprüche 7 oder 8, bei dem die Oberfläche ein Harnstoffharz und/oder ein Melaminharz und/oder ein Acrylatharz enthält.

10. Paneel nach einem der Ansprüche 7 bis 9, bei dem die Unterseite mit einem als Gegenzug dienenden Papier (5) versehen ist, welches bevorzugt mit Harnstoffharz und/oder Acrylatharz versehen ist.

11. Paneel nach einem der Ansprüche 7 bis 10 umfassend eine Trägerplatte (3) aus HDF.

12. Paneel nach einem der Ansprüche 7 bis 11, das seitlich mit Kupplungselementen versehen ist.

## Claims

1. Decor paper which is provided with conductive substances, namely with carbon with an average particle size of less than 1000 nm.

2. Decor paper according to claim 1, which is additionally provided with a urea resin and/or a melamine resin and/or an acrylate resin.

3. Decor paper according to claim 1 or 2, which is provided with a decor as well as preferably with abrasion resistant particles (2) provided on the decor, in particular preferred with aluminum oxide or corundum.

4. Decor paper according to any one of the preceding claims, with a paper weight between 10 g/m² and 50 g/m².

5. Decor paper according to any one of the preceding claims, which is provided with carbon with an average particle size of less than 500 nm as well as preferably more than 1 nm.

6. Decor paper according to any one of the preceding claims, wherein the paper contains acrylate in its interior.

7. Panel for flooring, comprising a decor paper (1) with a surface which is provided with a decor and which contains conductive particles, namely carbon particles, with an average particle size of less than 1000 nm.

8. Panel according to claim 7, wherein the surface is formed of a decor paper (1) with abrasion resistance particles (2) in particular corundum, applied thereon, which decor paper has a higher electrical connectivity as compared to other papers used during the manufacture of the panel.

9. Panel according to one of claims 7 or 8, wherein the surface contains a urea resin and/or a melamine resin and/or an acrylate resin.

10. Panel according to one of claims 7 to 9, wherein the underside is provided with a paper (5) serving as a counter acting paper, which is preferably provided with urea resin and/or acrylate resin.

11. Panel according to one of claims 7 to 10 comprising a carrier board (3) made from HDF.

12. Panel according to any one of claim 7 to 11, which is provided with coupling elements on its sides.

## Revendications

1. Papier décoratif qui est pourvu de substances conductrices, et plus précisément d'un carbone ayant une granulométrie moyenne inférieure à 1000 nm.

2. Papier décoratif selon la revendication 1, qui est en outre pourvu d'une résine d'urée et/ou d'une résine de mélamine et/ou d'une résine acrylique.

3. Papier décoratif selon la revendication 1 ou 2, qui est pourvu d'un décor et aussi, sur le décor, de préférence de particules (2) résistantes à l'abrasion, d'une manière particulièrement préférée d'oxyde d'aluminium ou de corindon.

4. Papier décoratif selon l'une des revendications précédentes, le grammage du papier étant compris entre 10 et 50 g/m².

5. Papier décoratif selon l'une des revendications précédentes, qui est pourvu d'un carbone ayant une granulométrie moyenne inférieure à 500 nm et de préférence supérieure à 1 nm.

6. Papier décoratif selon l'une des revendications précédentes, dans lequel le papier contient un acrylate dans sa masse intérieure.

7. Panneau pour un plancher, comprenant un papier décoratif ayant une surface qui est pourvue d'un décor, et qui contient des particules conductrices, et plus précisément des particules de carbone, ayant une granulométrie moyenne inférieure à 1000 nm.

8. Panneau selon la revendication 7, dans lequel la surface est formée par un papier décoratif (1) sur lequel sont appliquées des particules (2) résistantes à l'abrasion, en particulier du corindon, le papier décoratif ayant une conductivité électrique supérieure à celle d'autres papiers utilisés lors de la fabrication du panneau.

9. Panneau selon l'une des revendications 7 ou 8, dans lequel la surface contient une résine d'urée et/ou une résine de mélamine et/ou une résine acrylique.

10. Panneau selon l'une des revendications 7 à 9, dans lequel la face inférieure est pourvue d'un papier (5) servant de contretraction, papier qui de préférence est pourvu d'une résine d'urée et/ou d'une résine acrylique.

11. Panneau selon l'une des revendications 7 à 10, comprenant une plaque support (3) en HDF.

12. Panneau selon l'une des revendications 7 à 11, qui latéralement est pourvu d'éléments d'assemblage.
